# EUROPEAN PATENT APPLICATION

(11) **EP 4 478 324 A1**
(43) Date of publication of application: **18.12.2024**
(21) Application number: 23196231.7
(22) Date of filing: 08.09.2023
(51) Int. Cl.: G08G 1/01, G08G 1/017, G08G 1/04, H04W 4/44, H04W 4/46

(54) **APPARATUS AND METHOD FOR ASSIGNING TEMPORARY IDENTIFIER FOR GUIDANCE ZONE**

(30) Priority: 12.06.2023 KR 20230074973
(71) Applicant: Ways1 Inc., Uiwang-si, Gyeonggi-do 16006 (KR)
(72) Inventor: Kim, Jaehee, Yongin-si, Gyeonggi-do 16849 (KR)
(74) Representative: Grünecker Patent- und Rechtsanwälte PartG mbB

(57) **Abstract**

Disclosed is an apparatus for assigning a temporary identifier for a guidance zone, including a vehicle detector configured to detect a vehicle in a guidance zone; and a roadside unit (RSU) module configured to, when a guidance participation request message is transmitted to the vehicle entering the guidance zone and a guidance participation response message is received from the vehicle, assign a temporary identifier to the vehicle based on vehicle detection information detected through the vehicle detector and the guidance participation response message.

## Description

### CROSS-REFERENCE TO RELATED APPLICATION

This application claims priority to and the benefit of Korean Patent Application No. 10-2023-0074973, filed on June 12, 2023, the disclosure of which is incorporated herein by reference in its entirety.

### BACKGROUND

### 1. Field of the Invention

The present invention relates to an apparatus and method for assigning a temporary identifier for a guidance zone.

### 2. Discussion of Related Art

An cooperative-automated driving system combines road geometry information with detection information on vehicles on the road collected in real-time to generate information on predictions of traffic flow and accident/congestion risk, and provides this information to autonomous vehicles, enabling the autonomous vehicles to drive safely and efficiently.

The detection information on the vehicles on the road can be collected from a vehicle detector 100 installed along the roadside or from a probe vehicle traveling on the road through vehicle-to-everything (V2X) communication.

The vehicle detector recognizes objects on the road by processing images or point cloud data obtained using sensors for a camera, light detection and ranging (LiDAR), and radar, distinguishes the types of the objects (vehicles, two-wheeled vehicles, pedestrians, etc.), and acquires vehicle detection data such as positions of the objects (longitude and latitude coordinates), traveling directions and traveling speed of the objects, etc.

The probe vehicle transmits probe vehicle data through V2X communication. The probe vehicle data includes data such as the vehicle's position (longitude and latitude coordinates), direction, and speed, and various internal and external vehicle status data.

The background art of the present invention is disclosed in "Method of autonomous cooperative driving based on vehicle-road infrastructure information fusion and apparatus for the same" of Korean Patent Registration No. 10-2303716 (2021.09.13).

### SUMMARY OF THE INVENTION

Vehicle-to-everything (V2X) services based on SAE J2735 messages utilize a communication structure where vehicles transmit and receive information using broadcasting messages without being specified by their unique identifiers, and transmitted V2X messages can be received equally by both vehicles and roadside units (RSUs) within a certain distance. Therefore, for infrastructure guidance systems that need to transmit specific recommendations or instructions to individual vehicles, a method of accurately identifying a vehicle that has received a corresponding message is required.

The infrastructure guidance system generates a vehicle's temporary identifier (TemporaryID) to exchange information with a specific vehicle in a V2X communication environment.

The temporary identifier (TemporaryID) is generally used by each vehicle generating a random value. At this time, it cannot be guaranteed that two or more vehicles within a guidance zone will not coincidentally have the same value. Furthermore, when a change cycle arrives during the ongoing guidance service, changing the value may result in a mismatch with vehicle identification information recognized by the corresponding infrastructure, leading to the inability to perform normal functions.

To protect privacy and comply with applicable regulations, vehicle communication terminals may not expose a permanent unique identifier, so it is necessary to assign a non-overlapping temporary identifier for infrastructure-to-vehicle message exchange.

The present invention is directed to providing an apparatus and method for assigning a temporary identifier for a guidance zone, in which a temporary identifier for V2X communication that does not overlap those of other vehicles within a guidance zone is assigned to a vehicle from a corresponding infrastructure at the time when the vehicle enters the guidance zone managed by the infrastructure.

According to an aspect of the present invention, there is provided an apparatus for assigning a temporary identifier for a guidance zone, which may include a vehicle detector configured to detect a vehicle in a guidance zone; and an RSU module configured to, when a guidance participation request message is transmitted to the vehicle entering the guidance zone and a guidance participation response message is received from the vehicle, assign a temporary identifier to the vehicle based on vehicle detection information detected through the vehicle detector and the guidance participation response message.

The guidance participation request message according to the present invention may include a spatial range of the guidance zone.

The temporary identifier according to the present invention may be maintained while the vehicle passes through the guidance zone according to the spatial range of the guidance zone.

The guidance participation response message according to the present invention may include vehicle position information.

The RSU module according to the present invention may identify the vehicle that has transmitted the guidance participation response message among the vehicles detected by the vehicle detector by comparing the vehicle position information included in the guidance participation response message with the vehicle position information detected through the vehicle detector, and may assign the temporary identifier to the identified vehicle.

The RSU module according to the present invention may transmit a temporary identifier assignment message to the vehicle to which the temporary identifier is assigned, and the vehicle may store the temporary identifier through the temporary identifier assignment message.

The temporary identifier assignment message according to the present invention may include the temporary identifier and vehicle position information.

The apparatus for assigning a temporary identifier for a guidance zone according to the present invention may further include a vehicle terminal installed in the vehicle and configured to compare the vehicle position information included in the temporary identifier assignment message with the vehicle position information of the vehicle to store the temporary identifier according to whether the compared information matches.

According to another aspect of the present invention, there is provided a method of assigning a temporary identifier for a guidance zone, which may include transmitting, by an RSU module, a guidance participation request message to a vehicle entering a guidance zone; and when a guidance participation response message is received from the vehicle, assigning, by the RSU module, a temporary identifier to the vehicle based on vehicle detection information detected through a vehicle detector and the guidance participation response message.

The guidance participation request message according to the present invention may include a spatial range of the guidance zone.

The temporary identifier according to the present invention may be maintained while the vehicle passes through the guidance zone according to the spatial range of the guidance zone.

The guidance participation response message according to the present invention may include vehicle position information.

The assigning of the temporary identifier to the vehicle according to the present invention may include identifying, by the RSU module, the vehicle that has transmitted the guidance participation response message among the vehicles detected by the vehicle detector by comparing the vehicle position information included in the guidance participation response message with vehicle position information detected through the vehicle detector, and assigning, by the RSU module, the temporary identifier to the identified vehicle.

The assigning of the temporary identifier to the vehicle according to the present invention may include transmitting, by the RSU module, a temporary identifier assignment message to the vehicle to which the temporary identifier is assigned, and storing, by the vehicle, the temporary identifier through the temporary identifier assignment message.

The temporary identifier assignment message according to the present invention may include the temporary identifier and vehicle position information.

The assigning of the temporary identifier to the vehicle according to the present invention may include, by a vehicle terminal, comparing the vehicle position information included in the temporary identifier assignment message with the vehicle position information of the vehicle, and storing the temporary identifier according to whether the compared information matches.

According to an apparatus and method for assigning a temporary identifier for a guidance zone of an embodiment of the present invention, a temporary identifier for V2X communication that does not overlap those of other vehicles within a guidance zone can be assigned to a vehicle entering the guidance zone, and the temporary identifier can be maintained until the vehicle exits the guidance zone, thereby accurately identifying the vehicles within the guidance zone and smoothly providing various services for the vehicles.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a block diagram illustrating an apparatus for assigning a temporary identifier for a guidance zone according to an embodiment of the present invention.
FIG. 2 is a schematic diagram illustrating an apparatus for assigning a temporary identifier for a guidance zone according to an embodiment of the present invention.
FIG. 3 is an exemplary diagram illustrating a vehicle entering a guidance zone according to an embodiment of the present invention.
FIG. 4 is a flowchart illustrating a method of assigning a temporary identifier for a guidance zone according to an embodiment of the present invention.

### DETAILED DESCRIPTION OF EXEMPLARY EMBODIMENTS

Hereinafter, an apparatus and method for assigning a temporary identifier for a guidance zone according to embodiments of the present invention will be described in detail below with reference to the accompanying drawings. In this process, the thicknesses of lines or the sizes of components illustrated in the drawings may be exaggerated for clarity and convenience of description. In addition, terms to be described below as terms which are defined in consideration of functions in the present invention may vary depending on the intention of a user or an operator or usual practice. Accordingly, the terms need to be defined based on content throughout the present specification.

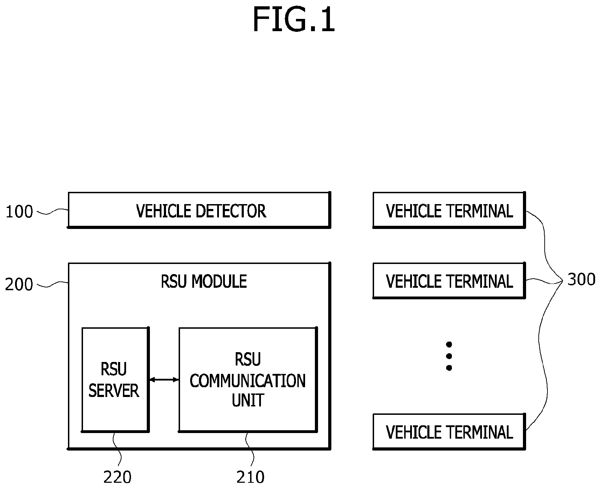

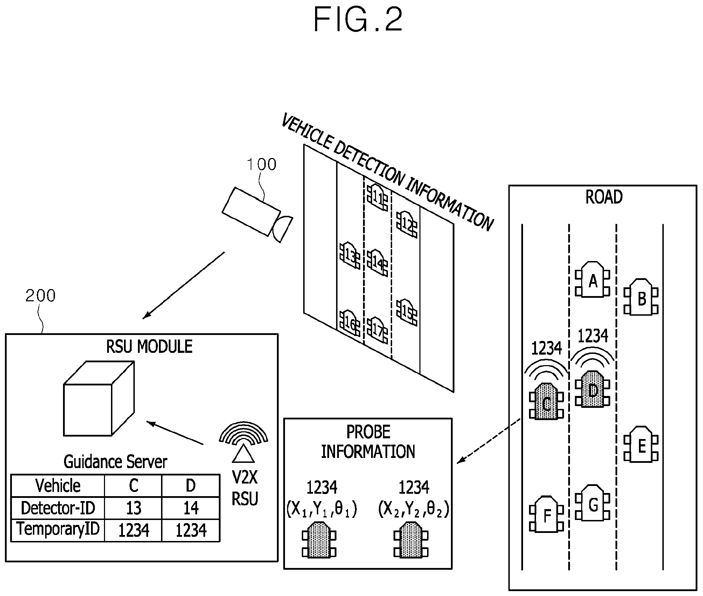

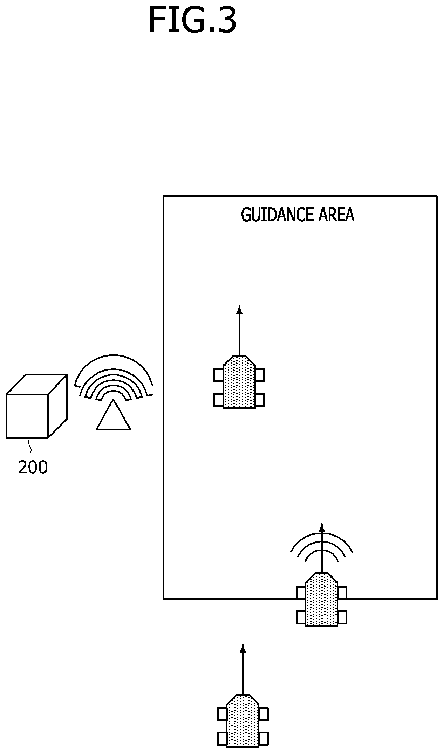

FIG. 1 is a block diagram illustrating an apparatus for assigning a temporary identifier for a guidance zone according to an embodiment of the present invention, FIG. 2 is a schematic diagram illustrating the apparatus for assigning a temporary identifier for a guidance zone according to the embodiment of the present invention, and FIG. 3 is an exemplary diagram illustrating a vehicle entering a guidance zone according to an embodiment of the present invention.

Referring to FIGS. 1 to 3, the apparatus for assigning a temporary identifier for a guidance zone according to the embodiment of the present invention includes a vehicle detector 100, a roadside unit (RSU) module 200, and a vehicle terminal 300.

The vehicle detector 100 is installed on a roadside.

The vehicle detector 100 acquires images or point cloud data of objects traveling on a road using sensors for a camera, light detection and ranging (LiDAR), and radar. The sensors installed on the vehicle detector 100 are not limited to the camera, LiDAR, and radar.

The vehicle detector 100 processes the acquired images or point cloud data to recognize objects on the road, distinguishes the types of the objects (vehicles, two-wheeled vehicles, pedestrians, etc.), and acquires vehicle detection information such as positions of the objects (longitude and latitude coordinates), traveling directions and traveling speeds of the objects, etc. Based on this, the vehicle detector 100 detects a vehicle entering the guidance zone.

The vehicle detector 100 transmits vehicle detection information of the vehicle entering the guidance zone to the RSU module 200.

The vehicle terminal 300 is installed in the vehicle.

The vehicle terminal 300 provides a communication interface with the RSU module 200.

The vehicle terminal 300 may receive a guidance participation request message from the RSU module 200.

The vehicle terminal 300 may transmit a guidance participation response message to the RSU module 200.

The vehicle terminal 300 may receive a temporary identifier assignment message from the RSU module 200 and store a temporary identifier assigned thereto. The vehicle terminal 300 maintains the temporary identifier without changing the same until the vehicle exits the guidance zone according to a spatial range of the guidance zone included in the guidance participation request message.

When the guidance participation request message is transmitted to the vehicle entering the guidance zone and the guidance participation response message is received from the vehicle, the RSU module 200 assigns the temporary identifier to the vehicle based on the vehicle detection information detected through the vehicle detector 100 and the guidance participation response message.

The apparatus for assigning a temporary identifier for a guidance zone includes an RSU communication unit 210 and an RSU server 220.

The RSU communication unit 210 provides a communication interface with the vehicle terminal 300 entering the guidance zone.

The RSU communication unit 210 receives the guidance participation response message from the vehicle terminal 300 through vehicle-to-everything (V2X) communication.

The guidance participation response message is a response message of the vehicle terminal 300 to the guidance participation request message transmitted from the RSU communication unit 210.

The guidance participation request message is a message requesting guidance participation from the vehicle that has entered the guidance zone.

The guidance participation request message is continuously transmitted from the RSU communication unit 210 to the vehicle that has entered the guidance zone.

The guidance participation request message may include a spatial range of the guidance zone.

The guidance participation response message may be transmitted to the RSU module 200 when a driver of the vehicle wishes to receive a guidance service upon entering the guidance zone.

The guidance participation response message may include current position information of the vehicle.

Meanwhile, the RSU communication unit 210 receives vehicle information from the vehicle terminal 300 through V2X communication.

The vehicle information may include data such as a position (longitude and latitude coordinates), direction, and speed of the vehicle, internal vehicle status information, and data on traveling situations of objects around the vehicle.

The RSU communication unit 210 transmits the temporary identifier assignment message and vehicle position information.

The RSU server 220 assigns, to the vehicle, a temporary identifier (TemporaryID) for V2X communication that does not overlap those of other vehicles within the guidance zone from a corresponding infrastructure at the time when the vehicle enters the guidance zone managed by the infrastructure.

More specifically, the RSU server 220 collects vehicle detection information on the vehicle entering the guidance zone from the vehicle detector 100 in real-time.

The RSU server 220 distinguishes and tracks vehicles based on object identifiers assigned by the vehicle detector 100. At this time, the RSU server 220 continuously transmits the guidance participation request message including the spatial range of the guidance zone to the vehicle within the guidance zone through the RSU communication unit 210.

In this case, the vehicle terminal 300 may receive the guidance participation request message transmitted from the RSU server 220. The vehicle terminal 300 transmits the guidance participation response message including current position information when a driver of the vehicle wishes to receive the guidance service upon entering the guidance zone.

The RSU communication unit 210 receives the guidance participation response message transmitted from the vehicle terminal 300 and transmits the received message to the RSU module 200.

That is, the RSU server 220 compares the vehicle position information included in the guidance participation response message with the vehicle position information of the vehicle detected by the vehicle detector 100 to identify the vehicle that has transmitted the corresponding guidance participation response message among the vehicles detected by the vehicle detector and to establish a correspondence, and thus the guidance participation response message and the vehicle are matched.

The RSU server 220 assigns the temporary identifier to the vehicle that has transmitted the guidance participation response message, and generates the temporary identifier assignment message including the temporary identifier and the vehicle position information.

In this case, the RSU server 220 may assign the temporary identifier to each vehicle by adding a predetermined value, for example, 1, to the temporary identifier assigned to the previous vehicle.

The RSU server 220 transmits the generated temporary identifier assignment message to the vehicle terminal 300 of the vehicle within the guidance zone through the RSU communication unit 210.

The vehicle terminal 300 of the vehicle within the guidance zone receives the temporary identifier assignment message, and compares the vehicle position information included in the temporary identifier assignment message with current position information of the vehicle terminal 300 to determine whether the compared information matches. Among these vehicles, the vehicle in which the vehicle position information received from the RSU communication unit 210 matches the current position information stores the temporary identifier of the corresponding temporary identifier assignment message as its own temporary identifier, and transmits a temporary identifier confirmation message to the RSU module 200. The temporary identifier is maintained while the corresponding vehicle passes through the guidance zone according to the spatial information of the guidance zone included in the guidance participation request message.

The RSU communication unit 210 receives the temporary identifier confirmation message and inputs the received message to the RSU server 220.

The RSU server 220 stores a correspondence between an infrastructure detection object identifier and the temporary identifier using the temporary identifier confirmation message.

Next, the RSU server 220 transmits a guidance providing message to the vehicle.

The guidance providing message may include the temporary identifier and guidance information.

At this time, the vehicle terminal 300 may receive the guidance providing message, filter the guidance providing message using the corresponding temporary identifier, and confirm a message designating the vehicle terminal 300 as a receiver.

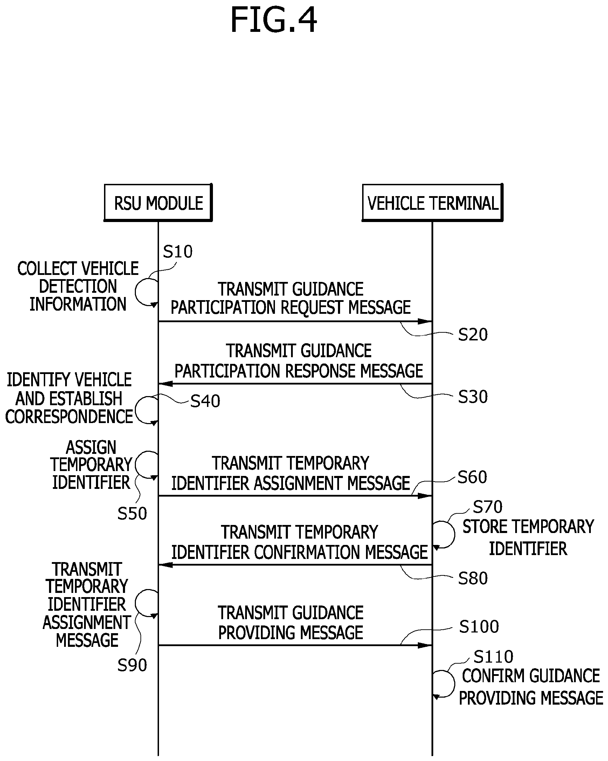

Hereinafter, a method of assigning a temporary identifier for a guidance zone according to an embodiment of the present invention will be described in detail with reference to FIG. 4.

FIG. 4 is a flowchart illustrating a method of assigning a temporary identifier for a guidance zone according to an embodiment of the present invention.

Referring to FIG. 3, the vehicle detector 100 detects a vehicle entering a guidance zone and transmits acquired vehicle detection information to the RSU module 200.

In addition, in operation S 10, the RSU server 220 collects vehicle detection information on the vehicle entering the guidance zone from the vehicle detector 100 through the RSU communication unit 210 in real-time.

In operation S20, the RSU server 220 continuously transmits a guidance participation request message including a spatial range of the guidance zone through the RSU communication unit 210.

In operation S30, the vehicle terminal 300 receives the guidance participation request message transmitted from the RSU module 200, and transmits a guidance participation response message including current position information when a driver of the corresponding vehicle wishes to receive a guidance service upon entering the guidance zone.

The RSU communication unit 210 inputs the guidance participation response message to the RSU server 220.

In operation S40, the RSU server 220 compares vehicle position information included in the guidance participation response message with vehicle position information of the vehicle detected by the vehicle detector 100 to identify the vehicle that has transmitted the corresponding guidance participation response message among the vehicles detected by the vehicle detector and to establish a correspondence.

The RSU server 220 assigns a temporary identifier to the vehicle that has transmitted the guidance participation response message in operation S50, and generates a temporary identifier assignment message including the temporary identifier. In this case, the RSU server 220 may assign the temporary identifier to each vehicle by adding a predetermined value, for example, 1, to the temporary identifier assigned to the previous vehicle.

In operation S60, the RSU server 220 transmits the generated temporary identifier assignment message and the corresponding vehicle position information to the vehicle within the guidance zone through the RSU communication unit 210.

The vehicle terminal 300 of the vehicle within the guidance zone receives the temporary identifier assignment message and the vehicle position information, and compares the vehicle position information with current position information of the vehicle terminal 300 to determine whether the compared information matches.

In operation S70, the vehicle terminal 300 stores the temporary identifier of the corresponding temporary identifier assignment message as its own temporary identifier according to whether the vehicle position information received from the RSU communication unit 210 matches the current position information.

The vehicle terminal 300 transmits a temporary identifier confirmation message to the RSU server 220 in operation S80, and the RSU server 220 stores a correspondence between an infrastructure detection object identifier and the temporary identifier in operation S90.

Next, the RSU server 220 may transmit a guidance providing message to the vehicle in operation S100, and the vehicle terminal 300 may receive the guidance providing message, filter the guidance providing message using the corresponding temporary identifier, and confirm the guidance providing message that designates the vehicle terminal 300 as a receiver.

In addition, the vehicle terminal 300 continues to maintain the temporary identifier until the vehicle exits the guidance zone.

Implementations described herein may be implemented in, for example, a method or process, an apparatus, a software program, a data stream, or a signal. Although discussed only in the context of a single form of implementation (e.g., discussed only as a method), implementations of the discussed features may also be implemented in other forms (for example, an apparatus or a program). The apparatus may be implemented in suitable hardware, software, firmware, and the like. A method may be implemented in an apparatus such as a processor, which is generally a computer, a microprocessor, an integrated circuit, a processing device including a programmable logic device, or the like. Processors also include communication devices such as a computer, a cell phone, a portable/personal digital assistant ("PDA"), and other devices that facilitate communication of information between end-users.

While the invention has been described with reference to embodiments shown in the figures, this is only an example, and those skilled in the art may understand that various modifications and other equivalent embodiments are possible from the description. Therefore, the true scope of the invention should be defined by the technical spirit of the appended claims.

### [Description of Reference numerals]

- 100:: Vehicle detector
- 200:: RSU module
- 210:: RSU communication unit
- 220:: Processor
- 300:: Vehicle terminal

## Claims

1. An apparatus for assigning a temporary identifier for a guidance zone, the apparatus comprising:
a vehicle detector configured to detect a vehicle in a guidance zone; and
a roadside unit (RSU) module configured to, when a guidance participation request message is transmitted to the vehicle entering the guidance zone and a guidance participation response message is received from the vehicle, assign a temporary identifier to the vehicle based on vehicle detection information detected through the vehicle detector and the guidance participation response message.

2. The apparatus of claim 1, wherein the guidance participation request message includes a spatial range of the guidance zone.

3. The apparatus of claim 1, wherein the temporary identifier is maintained while the vehicle passes through the guidance zone according to the spatial range of the guidance zone.

4. The apparatus of claim 1, wherein the guidance participation response message includes vehicle position information.

5. The apparatus of claim 4, wherein the RSU module identifies the vehicle that has transmitted the guidance participation response message among the vehicles detected by the vehicle detector by comparing the vehicle position information included in the guidance participation response message with the vehicle position information detected through the vehicle detector, and assigns the temporary identifier to the identified vehicle.

6. The apparatus of claim 1, wherein the RSU module transmits a temporary identifier assignment message to the vehicle to which the temporary identifier is assigned, and the vehicle stores the temporary identifier through the temporary identifier assignment message.

7. The apparatus of claim 6, wherein the temporary identifier assignment message includes the temporary identifier and vehicle position information.

8. The apparatus of claim 7, further comprising a vehicle terminal installed in the vehicle and configured to compare the vehicle position information included in the temporary identifier assignment message with the vehicle position information of the vehicle to store the temporary identifier according to whether the compared information matches.

9. A method of assigning a temporary identifier for a guidance zone, the method comprising:
transmitting, by a roadside unit (RSU) module, a guidance participation request message to a vehicle entering a guidance zone; and
when a guidance participation response message is received from the vehicle, assigning, by the RSU module, a temporary identifier to the vehicle based on vehicle detection information detected through a vehicle detector and the guidance participation response message.

10. The method of claim 9, wherein the guidance participation request message includes a spatial range of the guidance zone.

11. The method of claim 10, wherein the temporary identifier is maintained while the vehicle passes through the guidance zone according to the spatial range of the guidance zone.

12. The method of claim 9, wherein the guidance participation response message includes vehicle position information.

13. The method of claim 12, wherein the assigning of the temporary identifier to the vehicle includes identifying, by the RSU module, the vehicle that has transmitted the guidance participation response message among the vehicles detected by the vehicle detector by comparing the vehicle position information included in the guidance participation response message with vehicle position information detected through the vehicle detector, and assigning, by the RSU module, the temporary identifier to the identified vehicle.

14. The method of claim 9, wherein the assigning of the temporary identifier to the vehicle includes transmitting, by the RSU module, a temporary identifier assignment message to the vehicle to which the temporary identifier is assigned, and storing, by the vehicle, the temporary identifier through the temporary identifier assignment message.

15. The method of claim 14, wherein the temporary identifier assignment message includes the temporary identifier and vehicle position information.

16. The method of claim 15, wherein the assigning of the temporary identifier to the vehicle includes, by a vehicle terminal, comparing the vehicle position information included in the temporary identifier assignment message with the vehicle position information of the vehicle, and storing the temporary identifier according to whether the compared information matches.
